# EUROPEAN PATENT APPLICATION

(11) **EP 1 325 855 A1**
(43) Date of publication of application: **09.07.2003**
(21) Application number: 03000142.4
(22) Date of filing: 03.01.2003
(51) Int. Cl.: B62B 9/28

(54) **Baby carriage auxiliary seat**

(30) Priority: 07.01.2002 US 36511
(71) Applicant: Wolstein, Oren, Kfar Saba (IL)
(72) Inventor: Wolstein, Oren, Kfar Saba (IL)
(74) Representative: Cermak, Karel

(57) **Abstract**

An auxiliary seat for mounting on a baby carriage is disclosed which includes a seat bench, designed and configured to be mounted on the baby carriage in a substantially horizontal orientation, and including a mechanism for adjusting a length of the seat bench to enable mounting of the seat bench to carriages having a range of widths. The auxiliary seat further includes at least one first seat attachment element disposed at a respective end of the seat bench length adjusting mechanism, each configured to engage at least one respective structural member of the carriage, and at least one second seat attachment element disposed at a respective end of the seat bench length adjusting mechanism. The at least one second seat attachment element further includes a resilient element configured to secure the at least one second attachment element to the respective at least one structural member of the carriage.

## Description

### FIELD AND BACKGROUND OF THE INVENTION

The present invention relates to seats for baby carriages, and in particular, it concerns a child's auxiliary seat that is attachable to a baby carriage.

### BACKGROUND OF THE INVENTION

Baby carriages are primarily designed to accommodate one newborn or infant child up to approximately 2-3 years of age. In many cases, an older child accompanies the carriage user, in which case it may be desirable to transport the older child as well. It would be desirable to have a seating device that can be easily attached to the carriage that can accommodate an older child, preferably up to the age of 5-6 years, so as to provide such transport. Such device should be lightweight, safe, able to be attached to virtually any commonly found baby carriage, easy to maintain, and easy to affix and detach from the carriage.

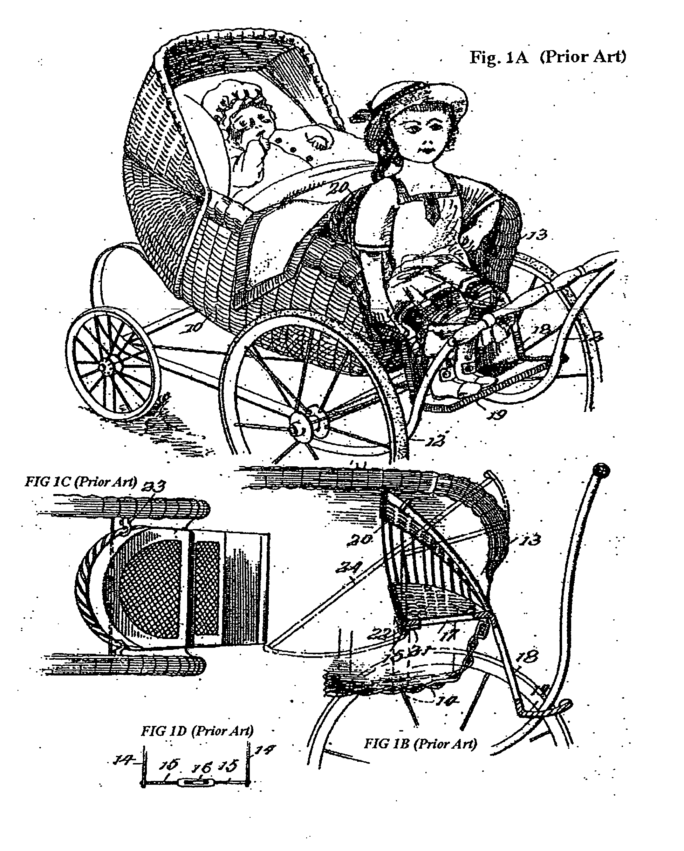

In the teachings of the prior art, as disclosed in US 1,409,331 and depicted in Figs 1A - 1D (prior art), an auxiliary seat is provided to accommodate a small child without interference with the normal use of the carriage for small infants. As can be seen in Figs 1A-1D, the auxiliary seat is designed specifically for use with a particular type of carriage depicted, being designed and configured to attach to a specific carriage structural member arrangement characteristic of a particular carriage configuration. With reference to the figures, carriage body **10** is supported on wheels **11,** with rearwardly extending handlebars **12** attached to carriage body 10. One end of the carriage is cut away to form opening **13**. The body of the carriage is reinforced longitudinally and transversely as well as vertically through the medium of metallic bars or reinforcing members **14** arranged in any suitable manner. A supporting member is provided in the form of a pair of rods **15** connected together at their adjacent ends by means of a turnbuckle **16** and having their remote ends connected to the sides of the carriage body or reinforcing members **14** located therein. This bar is located adjacent the cutaway end of the carriage body in order to support the seat which consists of a seat portion **17,** a leg rest **18** extending downward therefrom and a foot rest **19**. A back and sides **20** may be formed of wicker, reed or any other material desired. Iron bars **21** are provided and are secured to the seat portion and back and are formed with pressed out portions **22** which receive rods **15**, thus mounting the seat for swinging movement from the position shown in full lines in FIG 1B to the dotted position thereof.

As seen in the figures, the mechanism for mounting and supporting the auxiliary seat is not rigid and leaves the seat and its passenger susceptible to undesired and excessive movements. Further, it is clear from inspection of the figure that the seat design and configuration and location of attachment hardware are suitable for the particular carriage depicted, and is not adjustable for use with a plurality of carriages. Further, the device is not suitable for carriages that are in popular use today, which are provided with a low, substantially rectangular horizontal frame extending towards the user, eliminating the option of hanging an auxiliary seat frontwards from a carriage frame, as taught in the prior art.

Therefore, it would be desirable to have a child's auxiliary seat to accommodate an older child up to the age of 5-6 years, which is suitable for use with a wide variety of carriages in popular use today, lightweight, safe, adaptable to a plurality of carriages, easy to mount and detach from a carriage, and simple and inexpensive to manufacture.

### SUMMARY OF THE INVENTION

According to the present invention, there is provided an auxiliary seat for mounting on a carriage, the auxiliary seat including (a) a seat bench designed and configured to be mounted on the carriage in a substantially horizontal orientation (b) at least one first seat attachment element disposed at a respective end of the seat bench, each first seat attachment element configured to engage at least one respective structural member of the carriage; and (c) at least one second seat attachment element disposed at a respective end of the seat bench, the at least one second seat attachment element including a resilient element configured to secure the at least one second attachment element to the respective at least one structural member of the carriage.

According to the present invention, there is provided an auxiliary seat for mounting on a carriage, the auxiliary seat including (a) a seat bench designed and configured to be mounted on the carriage in a substantially horizontal orientation, the seat bench including a mechanism for adjusting a length of the seat bench to enable mounting of the seat bench to carriages having a range of widths; (b) at least one first seat attachment element disposed at a respective end of the mechanism for adjusting a length of the seat bench, each the at least one first seat attachment element configured to engage at least one respective structural member of the carriage; and (c) at least one second seat attachment element disposed at a respective end of the mechanism for adjusting a length of the seat bench, the at least one second seat attachment element further comprising a resilient element configured to secure the at least one second attachment element to the respective at least one structural member of the carriage.

According to the present invention there is provided a method of adapting a carriage to transport a plurality of children, the method including the steps of (a) providing an auxiliary seat that includes a seat bench including a mechanism for adjusting a length of the seat bench, (b) adjusting the seat bench to fit the carriage; and (c) mounting the auxiliary seat on the carriage with the seat bench in a substantially horizontal orientation.

According to further features of the described preferred embodiments of the invention, the mechanism for adjusting the length of the seat bench includes (i) at least one extension element slidingly mounted within a channel attached to the seat bench, and (ii) a mechanism for fixing the at least one extension element in place relative to the seat bench.

According to yet further features of the described preferred embodiments of the invention, the mechanism for fixing the at least one extension element in place includes at least one device mounted in the seat back and engaging the at least one extension element..

According to yet further features of the described preferred embodiments of the invention, the at least one device engaging the at least one extension element is a setscrew, a bolt, a nail, or a peg.

According to yet further features of the described preferred embodiments of the invention, the at least one extension element includes a mechanism providing at least one mounting surface that is substantially in the same geometric plane as a bottom surface of the channel.

According to yet further features of the described preferred embodiments of the invention, each the at least one first seat attachment mechanism includes a bracket designed and configured to engage the respective at least one structural member of the carriage by clamping to the structural member.

According to yet further features of the described preferred embodiments of the invention, each the at least one first seat attachment mechanism includes a mechanism for adjusting a fore to aft position of the each at least one first seat attachment mechanism relative to the seat bench.

According to yet further features of the described preferred embodiments of the invention, each at least one first seat attachment element includes a mechanism for adjusting a vertical position of each at least one first seat attachment mechanism relative to the seat bench.

According to yet further features of the described preferred embodiments of the invention, each the at least one second seat attachment mechanism includes a mechanism for adjusting a fore to aft position of the each at least one second seat attachment mechanism relative to the seat bench.

According to yet further features of the described preferred embodiments of the invention, the auxiliary seat includes a substantially vertically disposed seat back attached to the seat bench.

According to yet further features of the described preferred embodiments of the invention, the auxiliary seat includes a mechanism for securing a child to the auxiliary seat.

According to yet further features of the described preferred embodiments of the invention, the resilient element is a Velcro-equipped strap, a belt, a chain, a band, a string, a lace or a cord.

According to yet further features of the described preferred embodiments of the invention, the seat bench and the seat back are constructed as one piece.

According to yet further features of the described preferred embodiments of the invention, the seat bench and/or the seat back is furnished with padding.

The present invention successfully addresses the shortcomings of the existing technologies by providing an auxiliary seat, for mounting on a carriage, that is lightweight, safe to use, adaptable to a plurality of carriages, easy to mount and detach from a carriage, and simple and inexpensive to manufacture, relative to the prior art.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Figs. 1A, 1B, 1C and 1D (prior art) depict an auxiliary seat according to the teachings of US 1,409,331.
Fig. 2A depicts a front view of an auxiliary seat for a baby carriage according to one embodiment of the invention, in which the seat bench length is not adjustable;
Fig. 2B provides a side view of the device shown in Fig 2A;
Fig. 2C provides a top view of the device of Fig 2A;
Fig. 2D provides a perspective view of the device shown in Fig 2A;
Fig. 3A illustrates an example of an auxiliary seat mounted on a baby carriage according to the teachings of the invention depicted in Figs 2A - 2D;
Fig 3B illustrates a close-up perspective view of resilient element fastening details for mounting a fixed-length auxiliary seat on a carriage;
Fig. 4A depicts a front view of an auxiliary baby carriage seat according to another preferred embodiment of the invention, in which a seat bench is furnished with extension elements for adjusting a seat bench length;
Fig. 4B provides a side view of the device shown in Fig 4A;
Fig. 4C provides a top view of the device of Fig 4A;
Fig. 4D provides a perspective view of the device shown in Fig 4A;
Fig. 5 illustrates a bottom view of the device shown in Fig 4A;
Fig. 6 illustrates a rear view of the device shown in Fig. 4A;
Fig. 7 illustrates an example of an auxiliary seat mounted on a baby carriage according to the teachings of the invention depicted in Fig 4A; and
Fig 8 illustrates a close-up perspective view of resilient element fastening details for mounting an adjustable-length auxiliary seat on a carriage.

### DESCRIPTION OF THE PREFERRED EMBODIMENTS

The present invention is an auxiliary seat. for mounting on a baby carriage to enable simultaneous transport of a small child in addition to a baby.

The principles and operation of the auxiliary seat according to the present invention may be better understood with reference to the drawings and the accompanying description.

Before explaining at least one embodiment of the invention in detail, it is to be understood that the invention is not limited in its application to the details of construction and the arrangement of the components set forth in the following description or illustrated in the drawing. The invention is capable of other embodiments or of being practiced or carried out in various ways. Also, it is to be understood that the phraseology and terminology employed herein is for the purpose of description and should not be regarded as limiting

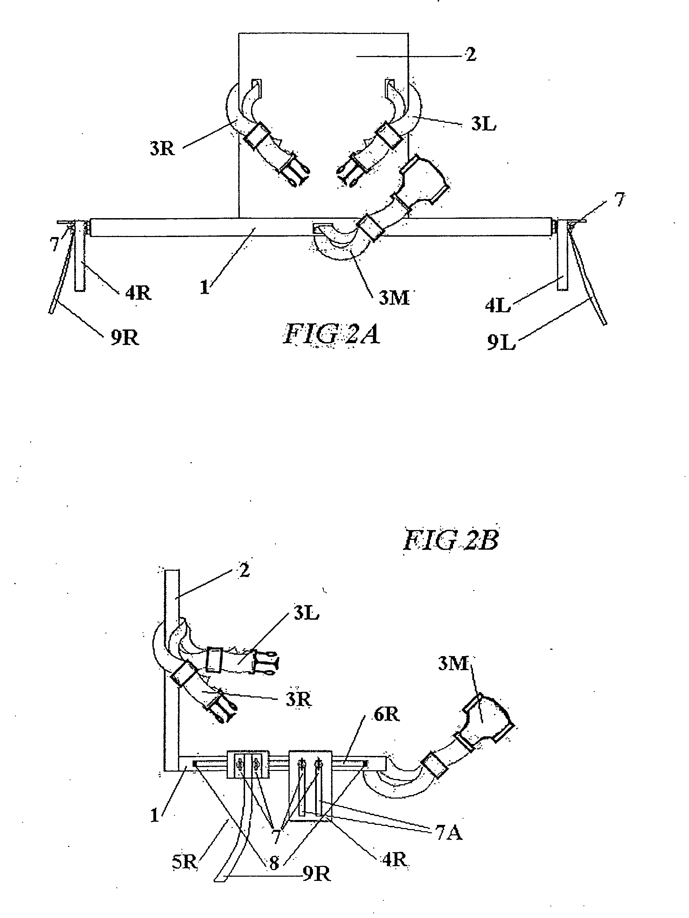

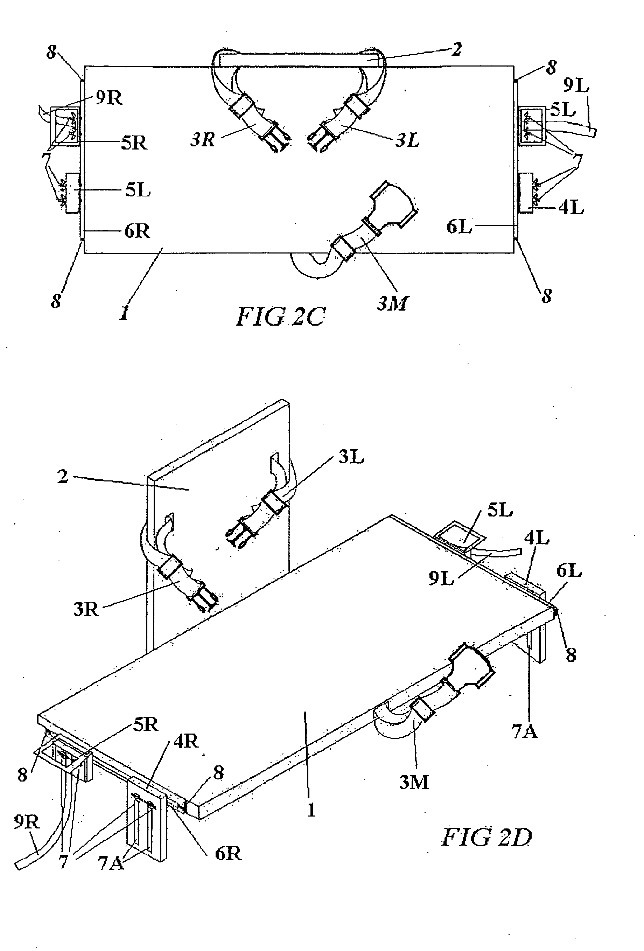

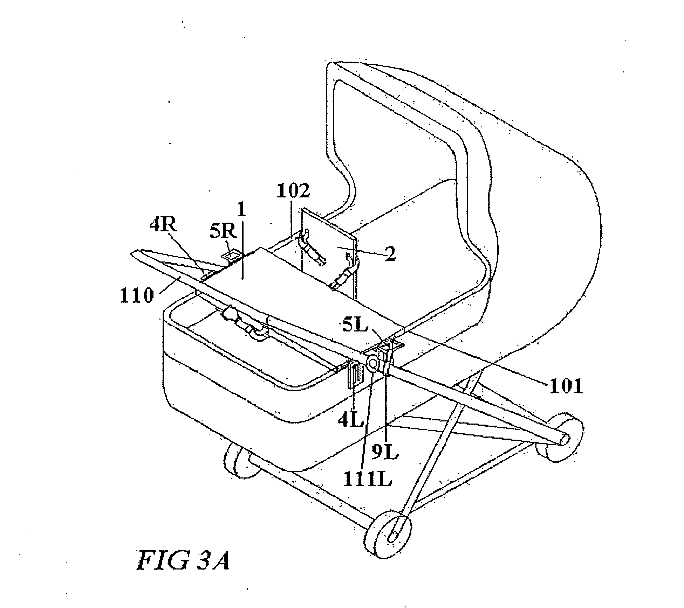

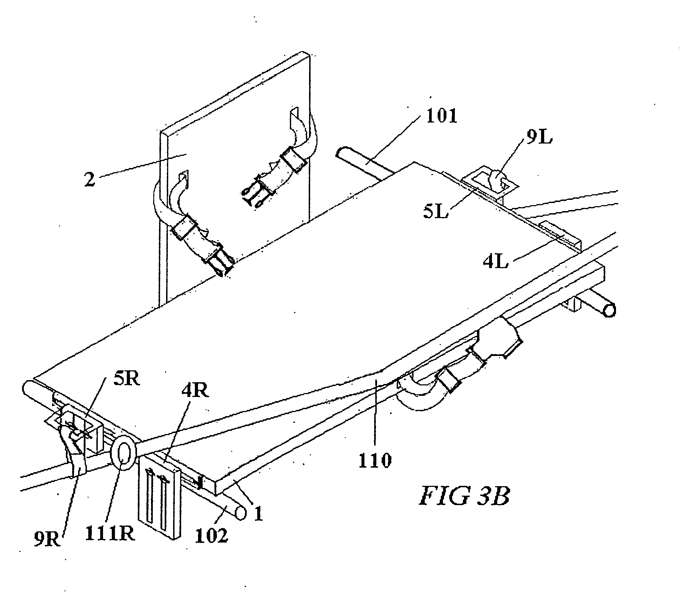

Referring now to the drawings, Figs. 2A - 2D, Fig 3A and Fig 3B illustrate one form of the apparatus constructed in accordance with the present invention. In a preferred embodiment of the invention, as illustrated in FIGs 2A, 2B, 2C and 2D, a child's auxiliary seat consists of a seat bench **1** for mounting on a baby carriage in a substantially horizontal orientation, a seat back **2** is rigidly attached to seat bench **1** in a substantially vertical orientation. Attachment of seat back **2** to seat bench **1** is preferably accomplished using suitable fastening hardware (not shown) that are capable of rigidly attaching seat back **2** to seat bench **1**, for example, screws, bolts, nails or other suitable devices. Alternatively, seat back **2** and seat bench **1** preferably are constructed as a single unit, preferably from a thermoplastic material or other suitable material such as metal or wood, thereby eliminating the need for fastening hardware.

Right seat belt **3R** and left seat belt **3L** are attached to seat back **2** and middle seat belt **3M** is attached to seat bench **1**, as shown in the figures, with the aid of loops in the belts which are engaged to seat bench **1** and seat back **2** through slots in the surfaces of seat bench **1** and seat back **2**.

In a preferred embodiment of the invention, seat bench **1** and/or seat back **2** are preferably padded or upholstered to provide comfortable passenger support.

A right front mounting bracket **4R** and a left front mounting bracket **4L** are slidingly mounted onto each end of seat bench **1** using suitable fastening hardware, such as wing nuts **7** screwed onto bolts having heads slidingly mounted within rails **6R** and **6L**. Rails **6R** and **6L** are equipped at each end with rubber, plastic, metal or wooden stops **8** to prevent disengagement of fastening nuts **7** by limiting the fore to aft range of motion of fastening nuts **7**. This arrangement enables a user to adjust a fore to aft position of right front bracket **4R** and left front bracket **4L** to enable accommodation of a wide variety of carriage designs. In addition, vertical slots **7A** are provided in right front bracket **4R** and in left front bracket **4L** to accommodate fastening nuts **7** while enabling adjustment of the vertical disposition of front attachment brackets **4R** and **4L**. Front attachment bracket vertical disposition adjustability allows a user to position front brackets **4R** and **4L** for a variety of carriage designs such that front brackets **4R** and **4L** are locked in place with respect to the seat, while being in firm contact with a bottom-facing surface of carriage handle bar **110**, as illustrated in Fig 3B. This positioning of front attachment brackets **4R** and **4L** prevents the seat from tilting backwards in the event that an occupant of the seat leans backwards with respect to the seat, since an upward movement of front brackets **4R** and **4L**, which would necessarily occur if the seat were to tilt backwards, is limited by handle bar **110.** Right rear bracket **5R** and left rear bracket **5L** are similarly slidingly attached to seat bench **1.** Rear brackets **5R** and **5L** are furnished with resilient elements **9R** and **9L,** respectively, for engaging carriage structural members. Front and rear brackets **4R, 4L, 5R** and **5L** are preferably constructed of a rigid material such as wood, metal or plastic.

Adjustment by a user of fore to aft positions of brackets **4R, 4L, 5R** and **5L** is necessary to firmly mount the apparatus on a baby carriage. Fore to aft position adjustability allows a user to mount a seat onto a plurality of baby carriages of various designs, despite differences in spatial disposition of structural members, to ensure that the auxiliary seat is securely mounted to a baby carriage for its safe use. However, the preferred embodiment of the invention is limited in applicability to carriages having a width virtually equal to a distance between inward facing surfaces of brackets **4R** and **4L**, and between **5R** and **5L.**

Fig 3A illustrates an auxiliary seat mounted on a carriage according to the teachings of a preferred embodiment of the invention. As depicted in Fig 3A, mounting of the device on a carriage is accomplished by placing an auxiliary seat on a baby carriage such that seat bench **1** is disposed substantially horizontally and is supported by carriage structural elements **101** and **102**. At this point, front brackets **4R** and **4L** are clamped down by a user upon structural elements **101** and **102**, respectively, while positioned in front (towards the user) of carriage handle bar **110.** Rear brackets **5R** and **5L** are positioned to the rear of handle bar **110** (away from a user). Front brackets **4R** and **4L**, which are slidingly mounted in rails **6R** and **6L** (illustrated to better advantage in Figs 2A -2D), are then pushed toward the back of a carriage (away from the user) and adjusted vertically until front brackets **4R** and **4L** are in contact with a bottom-facing surface of carriage handle bar **110**. Since carriage handle bar **110** will generally be disposed in a diagonal orientation, the respective areas of contact of front brackets **4R** and **4L** with carriage handle bar **110** will generally be limited to the seat rear-facing upper corners of front brackets **4R** and **4L.** Front attachment brackets **4R** and **4L** are then secured in place relative to seat bench **1** by tightening fastening nuts **7**.

Rear attachment brackets **5R** and **5L** are then positioned at any convenient fore to aft location in back of carriage handle bar **110**, within a range of motion defined by handle bar **110** and a rubber or plastic stop **8** disposed at each end of mounting rails **6R** and **6L**. Fastening nuts **7** disposed on brackets **5R** and **5L** are then tightened, fixing brackets **5R** and **5L** in place. An auxiliary seat is then further secured to a carriage by fastening resilient elements **9R** and **9L** to a lower extension of carriage handle bar **110** at points below carriage structural elements **101** and **102**. In a preferred embodiment of the invention depicted in Figs. 3A and 3B, resilient elements **9R** and **9L** are preferably Velcro-equipped straps secured to a lower extension of carriage handle bar **110** by pressing together mating Velcro surfaces disposed at an end and at a suitable location along the length of each strap. In other preferred embodiments of the invention, resilient elements **9R** and **9L** are belts, chains, bands, strings, laces or cords, and are furnished with a fastening mechanisms such as hooks, catch buckles, snap-in buckles, or various knots. After fastening resilient elements **9R** and **9L** to handle bar **110,** upward movement of resilient elements **9R** and **9L** is limited by the presence of carriage handle bar pivot adjusting knobs **111R** and **111L.**

A small child is secured to an auxiliary seat by placing the child on the seat and extending right seat belt **3R** and left seat belt **3L** over the child's shoulders. Middle seat belt **3M** is brought up from seat bench **1** between the child's legs and secured to right seat belt **3R** and left seat belt **3L** by inserting male buckles disposed at an end of right seat belt **3R** and at an end of left seat belt **3L** into respective receptacles of a female buckle disposed at an end of middle seat belt **3M.**

Removal of the child is effected by releasing buckles at ends of seat belts **3R** and **3L** from middle seat belt **3M.** The auxiliary seat is removed from the carriage by first releasing belts **9R** and **9L** to disengage the auxiliary seat from the lower extension of carriage handle bar **110**, loosening nuts **7** to release brackets **4R, 4L, 5R** and **5L,** then lifting the auxiliary seat up and forward (towards the user) away from the mounting position of the auxiliary seat on the carriage.

In a preferred embodiment of the invention described heretofore, a seat bench **1** of an auxiliary seat according to the teachings of the invention has a fixed width, which is designed to be compatible with a baby carriage of similar width. Since ends of seat bench **1** must reach structural elements **101** and **102** of a carriage, yet must not be longer than a length defined by a distance between inward facing surfaces of handlebar **110**, a device according to this preferred embodiment of the invention is thus limited in applicability to essentially one baby carriage width.

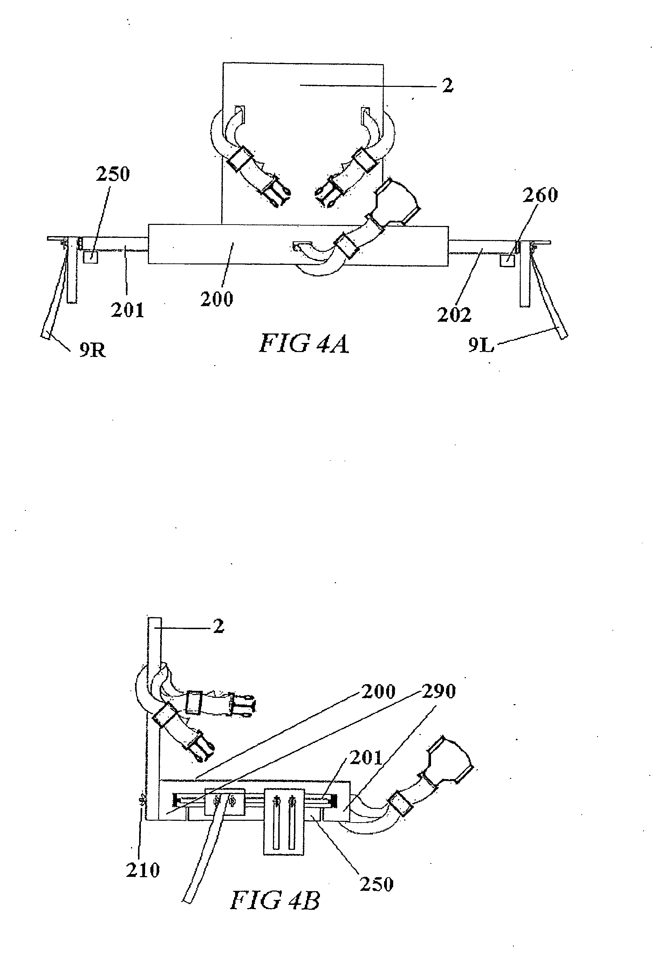

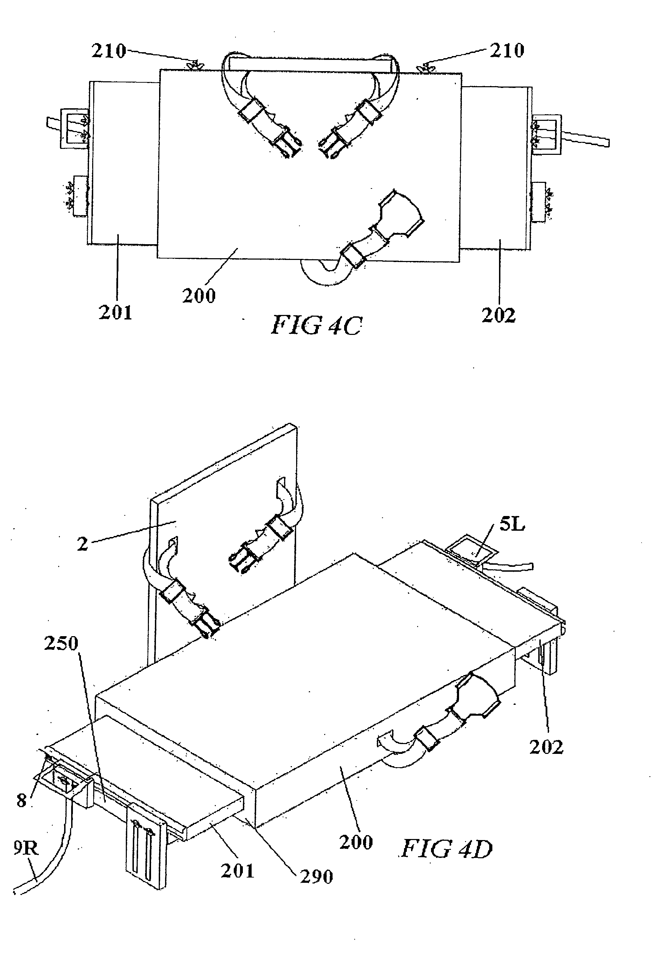

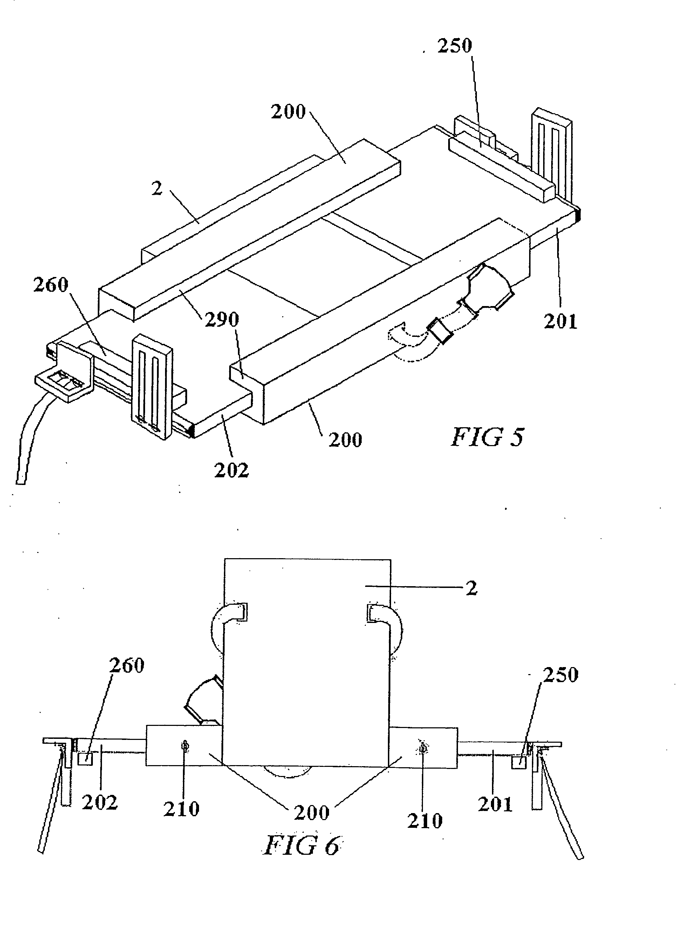

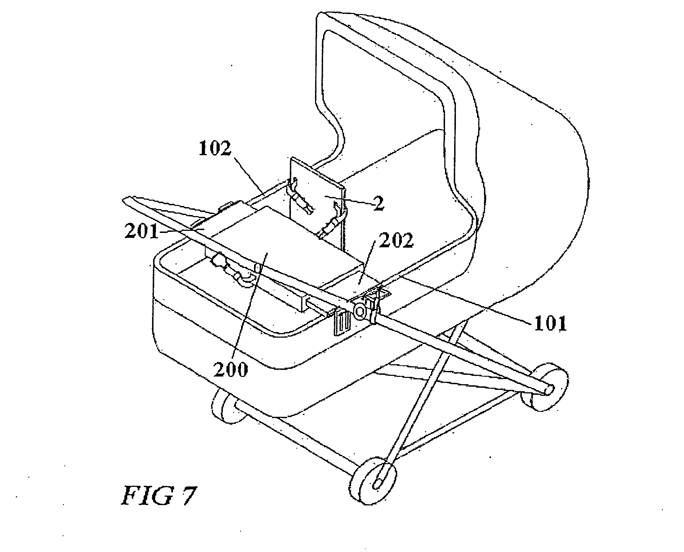

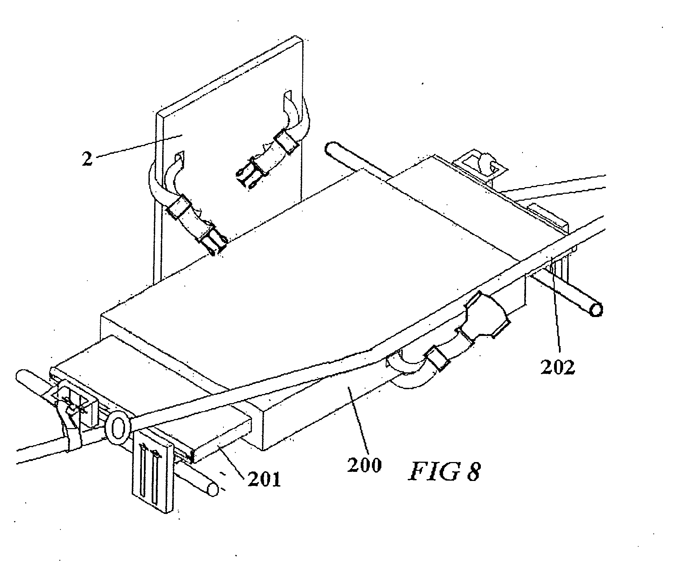

In another preferred embodiment of the invention illustrated in Figs 4A - 4D, 5, 6, 7 and 8, a length of a seat bench is essentially variable, allowing a user to adjust a length of an auxiliary seat to accommodate carriages of various widths. As shown in the figures, a child's auxiliary seat according to the teachings of this preferred embodiment of the invention consists of a seat bench **200** for mounting on a baby carriage in a substantially horizontal orientation, having a seat back 2 attached to it as described above in a substantially vertical orientation. A bottom surface of seat bench **200** is furnished with channel **290**, also shown to better advantage in Fig. 5, to provide a mechanism for slidable mounting of extension elements **201** and **202** to a bottom surface of seat bench **200**. Extension elements **201** and **202** are furnished with mounting bars **250** and **260**, attached to bottom surfaces of extension elements **201** and **202,** respectively. The bottom surfaces of mounting bars **250** and **260** are substantially disposed in the same geometric plane as the bottom surfaces of channel **290**. When mounting a seat on a carriage, a user places mounting bars **250** and **260** on carriage side frame members **101** and **102**. The use of mounting bars **250** and **260** enables level mounting of the seat with respect to the carriage frame, in case the seat is positioned by a user towards the user-facing end of the carriage, such that channel **290** is mounted on a front facing-carriage frame member. Other mechanisms for accommodating extension elements are preferably applicable to enable adjustment of an effective length of seat bench **1**. Extension elements are preferably constructed of a material such as wood, plastic or metal.

Prior to mounting an auxiliary seat onto a baby carriage, extension elements **201** and **202** are positioned by a user of the device such that an overall length of seat bench **2**, including lengths of extended portions of extension elements **201** and **202**, is suitable to a width of a carriage. Extension elements **201** and **202** are fixed in position relative to seat bench **200** and seat back **2** by adjusting set screws **210**, shown to better advantage in Fig. 6, which are inserted through a threaded cross section of seat back **2**. Set screws **210** are tightened until they press against a back surface of each extension board, thereby fixing extension boards **201** and **202** in place relative to seat bench **200**. Set screws **210** may preferably be engaged in holes furnished at predetermined positions in extension boards **201** and **202,** thereby defining specific discrete effective seat bench lengths for standard carriage widths. In addition to threaded screws, fixing extension elements **201** and **202** in place is preferably accomplished using nails, bolts, pins, pegs or other suitable hardware.

Once a desired seat bench length has been fixed, the seat is mounted by placing mounting bars **250** and **260** on carriage structural members **101** and **102**, respectively. Further procedures for mounting of an auxiliary seat according to this embodiment of the invention, placing a child in the seat, removing the child from the seat, and removing the auxiliary seat from the carriage are performed as described previously for an auxiliary seat having a fixed length.

Although the invention has been described in a context of application to a baby carriage, it is evident that the specific embodiments can be applied to other devices having similar structural configurations such as shopping carts, wagons, strollers and other vehicles.

It will be appreciated that the above descriptions are intended only to serve as examples, and that many other embodiments are possible within the spirit and the scope of the present invention.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

Those skilled in the art will readily appreciate that various modifications and changes can be applied to various embodiments of the invention as hereinbefore exemplified without departing from its scope defined in and by the appended claims.

## Claims

1. An auxiliary seat for mounting on a carriage, the auxiliary seat comprising:
(a) a seat bench designed and configured to be mounted on the carriage in a substantially horizontal orientation;
(b) at least one first seat attachment element disposed at a respective end of said seat bench, each said at least one first seat attachment element configured to engage at least one respective structural member of the carriage; and
(c) at least one second seat attachment element disposed at a respective end of said seat bench, said at least one second seat attachment element including a resilient element configured to secure said at least one second attachment element to the carriage.

2. The auxiliary seat of claim 1, wherein each said at least one first seat attachment element includes a bracket designed and configured to engage said respective at least one structural member of the carriage by clamping to said structural member.

3. The auxiliary seat of claim 1, wherein each said at least one first seat attachment element includes a mechanism for adjusting a fore to aft position of said each at least one first seat attachment mechanism relative to said seat bench.

4. The auxiliary seat of claim 1, wherein each said at least one first seat attachment element includes a mechanism for adjusting a vertical position of said each at least one first seat attachment mechanism relative to said seat bench.

5. The auxiliary seat of claim 1, wherein each said at least one second seat attachment element includes a mechanism for adjusting a fore to aft position of said each at least one second seat attachment mechanism relative to said seat bench.

6. The auxiliary seat of claim 1, further comprising (Four) a substantially vertically disposed seat back attached to said seat bench.

7. The auxiliary seat of claim 1, further comprising
(d) a mechanism for securing a child to the auxiliary seat.

8. The auxiliary seat of claim 1, wherein said resilient element is selected from the group consisting of Velcro-equipped straps, belts, chains, bands, strings, laces and cords.

9. The auxiliary seat of claim 6, wherein said seat bench and said seat back are constructed as one piece.

10. The auxiliary seat of claim 6, wherein at least one element of a group of elements including said seat bench and said seat back is furnished with padding.

11. An auxiliary seat for mounting on a carriage, the auxiliary seat comprising:
(a) a seat bench designed and configured to be mounted on the carriage in a substantially horizontal orientation, said seat bench including a mechanism for adjusting a length of said seat bench to enable mounting of said seat bench to carriages having a range of widths;
(b) at least one first seat attachment element disposed at a respective end of said mechanism for adjusting said length of said seat bench, each said at least one first seat attachment element configured to engage at least one respective structural member of the carriage; and
(c) at least one second seat attachment element disposed at a respective end of said mechanism for adjusting said length of said seat bench, said at least one second seat attachment element including a resilient element configured to secure said at least one second attachment element to said respective at least one structural member of the carriage.

12. The auxiliary seat of claim 11 wherein said mechanism for adjusting a length of said seat bench includes:
(i) at least one extension element slidingly mounted within a channel attached to said seat bench, and
(ii) a mechanism for fixing said at least one extension element in place relative to said seat bench.

13. The auxiliary seat of claim 11 wherein said mechanism for fixing said at least one extension element in place includes at least one device mounted in said seat back and engaging said at least one extension element..

14. The auxiliary seat of claim 13 wherein said at least one device is selected from the group consisting of setscrews, bolts, nails, and pegs.

15. The auxiliary seat of claim 12 wherein said at least one extension element includes a mechanism providing at least one mounting surface that is substantially in a common geometric plane with a bottom surface of said channel.

16. The auxiliary seat of claim 11, wherein each said at least one first seat attachment mechanism includes a bracket designed and configured to engage said respective at least one structural member of the carriage by clamping to said structural member.

17. The auxiliary seat of claim 11, wherein each said at least one first seat attachment mechanism includes a mechanism for adjusting a fore to aft position of said each at least one first seat attachment mechanism relative to said seat bench.

18. The auxiliary seat of claim 11, wherein each said at least one first seat attachment element includes a mechanism for adjusting a vertical position of said each at least one first seat attachment mechanism relative to said seat bench.

19. The auxiliary seat of claim 11, wherein each said at least one second seat attachment mechanism includes a mechanism for adjusting a fore to aft position of said each at least one second seat attachment mechanism relative to said seat bench.

20. The auxiliary seat of claim 11, further comprising
(d) a substantially vertically disposed seat back attached to said seat bench.

21. The auxiliary seat of claim 11, further comprising
(d) a mechanism for securing a child to the auxiliary seat.

22. The auxiliary seat of claim 11, wherein said resilient element is selected from the group consisting of Velcro-equipped straps, belts, chains, bands, strings, laces and cords.

23. The auxiliary seat of claim 20, wherein said seat bench and said seat back are constructed as one piece.

24. The auxiliary seat of claim 20, wherein at least one element, selected from among said seat bench and said seat back, is furnished with padding.

25. A method of adapting a carriage to transport a plurality of children, the method comprising the steps of:
(a) providing an auxiliary seat that includes a seat bench including a mechanism for adjusting a length of said seat bench,
(b) adjusting said seat bench to fit the carriage; and
(c) mounting said auxiliary seat on the carriage with said seat bench in a substantially horizontal orientation.
